# EUROPEAN PATENT APPLICATION

(11) **EP 2 210 535 A1**
(43) Date of publication of application: **28.07.2010**
(21) Application number: 09151100.6
(22) Date of filing: 22.01.2009
(51) Int. Cl.: A47G 19/10, A47J 36/24

(54) **A table mat**

(71) Applicant: SS-Holding ApS, DK-6100 Haderslev (DK)
(72) Inventor: Hansen, Rasmus Hartman Schmidt, DK-6610, Gram (DK); Hansen, Kenneth Underbjerg, DK-6534, Agerskov (DK); Thuesen, Sofie Barsøe, DK-6500, Vojens (DK); Petersen, Kristina Fensholdt, DK-6100, Haderslev (DK); Søgaard, Søren Peter, DK-6100, Haderslev (DK)
(74) Representative: Trier, Mikkel Roed

(57) **Abstract**

The table mat (1) comprises a foot part (2) forming a bottom adapted for abutting a plane surface, a substantially circular sucking disc part (3) manufactured from an elastic heat insulating material and comprising a substantially plane bottom portion (3a) and a peripheral portion (3b) extending inclined upwards from said bottom portion (3a) to form a concave sucking disc adapted to adhere by means of pressure to a flat bottom of a piece of kitchen ware. The bottom portion (3a) of said sucking disc part (3) is attached to a plane major portion (2a) of said foot part (2), said bottom portion (3a) of said sucking disc part (3) and said major portion (2a) of said foot part (2) being substantially plane-parallel. The peripheral portion (3b) of said sucking disc part (3) projects to or beyond a peripheral edge of said foot part (2).

## Description

The present invention relates to a table mat according to the introductory part of claim 1.

Table mats of this kind are known in many forms and manufactured from many different heat insulating materials. The purpose of such table mats is primarily to protect the table surface from often substantial amounts of heat conducted from the bottom of hot kitchen ware, such as a hot pot, positioned on the table mat. Another purpose is to protect the table surface from being scratched by often rather sharp metallic edges at the bottom of the kitchen ware.

A substantial problem with such table mats is the low frictional forces between table mat and the kitchen ware positioned on the table mat. Since the friction between table surface and table mat are often larger than the friction between table mat and the often metallic bottom of kitchen ware, the table mat will not follow the kitchen ware if it is slid across the table surface. Instead, one has to lift the kitchen ware, move the table mat to the desired spot, and then reposition the kitchen ware on the table mat; i.e. a somewhat burdensome operation. Further, if the kitchen ware is heavy or bulky, it will often be necessary to put the kitchen ware down on the table surface before moving the table mat, implying a risk of damaging the table surface.

To alleviate this problem table mats comprising one or more magnets have been suggested. These table mats provide adherence of the table mat to metallic kitchen ware, in theory allowing the table mat to follow the kitchen ware when the kitchen ware is raised in order to reposition it on the table surface.

One example of such a magnetic table mat is disclosed in FR 2868927 on which the introductory part of claim 1 is based. FR 2868927 discloses a table mat comprising a plane mat body made from heat insulating material, e.g. wood, which forms an insulating barrier between a hot pot or the like and a surface, such as a table surface. The bottom of the non-magnetic mat body comprises an aperture in which a magnet is inserted and secured, e.g. by means of gluing. The aperture is covered by means of a plug. Hereby, adherence of the pot to the table mat is achieved, which prevents slippage of the pot in relation to the table mat.

Although to some extent alleviating the problem of lack of adhesion of kitchen ware to the table mat, magnetic table mats face several problems. First, the magnetic forces depend substantially on the form and material of the kitchen ware; a thick pot bottom of highly magnetically susceptible material provides much stronger adherence than the opposite. Furthermore, manufacture of magnetic table mats is cumbersome and expensive since at least two different materials need to be included, magnetic materials tending to provide very poor insulating properties. Thus, one or more magnets need to be positioned in a heat insulating material. Since the table mat thus often comprises joints or seams, dirt tends to stick to it, and it is difficult to clean.

GB 544154 discloses a mat comprising a base furnished with a suction device, both being made from an insulating material such as india rubber. A perforated top or seating piece, e.g. of cork, is attached to the upper part of the base, surrounding the suction device, to form the upper surface of the mat. On its bottom the base is attached to a rubber backing. The mat is detachably mounted in a bottom socket of a stand or carrier for plates, dishes and other vessels. Hereby, the mat extends through the bottom to be attached by means of the suction device to a plate or the like positioned in the stand or carrier. Also, the mat forms a heat insulating foot of the stand or carrier, the foot in use abutting the table surface.

FR 2914168 discloses a dish mat, the purpose of which is to ensure that a hot dish or saucepan positioned on it does not slide on a table surface, e.g. when stirring in it with a spoon. The dish mat comprises an upwards-facing sucking disc to which a dish can be attached. Below and attached to the sucking disc is a complicated spring-biased system allowing the dish to be inclined without the device sliding on the table surface. The sucking disc is attached to the inclination system by means of a shaft secured to the sucking disc and extending downwards into the below system.

On this background the object of the invention is to improve on the prior art table mats with regards to simplicity of construction, ease and costs of manufacture, ease of cleaning, as well as the dependency of adhering forces between table mat and kitchen ware on form and material of the kitchen ware.

To meet this object the table mat according to the present invention is characterized by the features of the characterizing part of claim 1.

Comparing with prior art table mats of the same function, the structure of the table mat according to the present invention is simplified, making it possible to manufacture it faster, cheaper and with less material consumption. Further, the table mat can be produced in a single moulding process from a single material, such as a heat resistant silicone composition. Also, the table mat can be made smaller, more leight-weight and more flexible, i.e. bendable, reducing transportation and inventory costs.

Since the table mat according to the invention can be manufactured without joints or seams, it can be more readily cleaned, e.g. in a dish washer, and dirt will generally less likely stick to it.

Furthermore, dependency of adhering forces between table mat and kitchen ware on form and material of the kitchen ware is significantly reduced. The sucking disc part will adhere firmly to any smooth kitchen ware surface, e.g. a plane metal surface. Magnetically susceptibility of the kitchen ware material is of no importance. Since it is more leight-weight than magnetic table mats, it will be even less likely to be released from the kitchen ware when the latter is raised from a table surface.

The sucking disc part comprising a substantially plane bottom portion and a peripheral portion extending inclined upwards from the bottom portion makes the table mat even thinner, lighter, more flexible, durable, and easy to manufacture while maintaining superior adhesive abilities. Since the sucking disc part comprises an upwards projecting peripheral portion, which extends to or beyond a peripheral edge of the foot part, an optimum suction force and, thereby, adhesion to the kitchen ware is provided.

Further, with the present invention it is possible to manufacture a table mat in which said foot and sucking disc parts are integrally moulded parts, making manufacture cheaper and the resulting product more durable and easy to clean.

The dependent claims define advantageous embodiments of the table mat according to the invention.

The invention will be explained in detail in the following by means of examples of embodiments with reference to the drawing, which is drawn to scale. In the drawing:
Fig. 1 is an elevational view of an embodiment of a table mat according to the present invention seen from above,
Fig. 2 is an elevational view of the table mat according to Fig. 1 seen from below, and
Fig. 3 is a sectional view of the table mat according to Fig. 1 taken along the line III-III of Fig. 2.

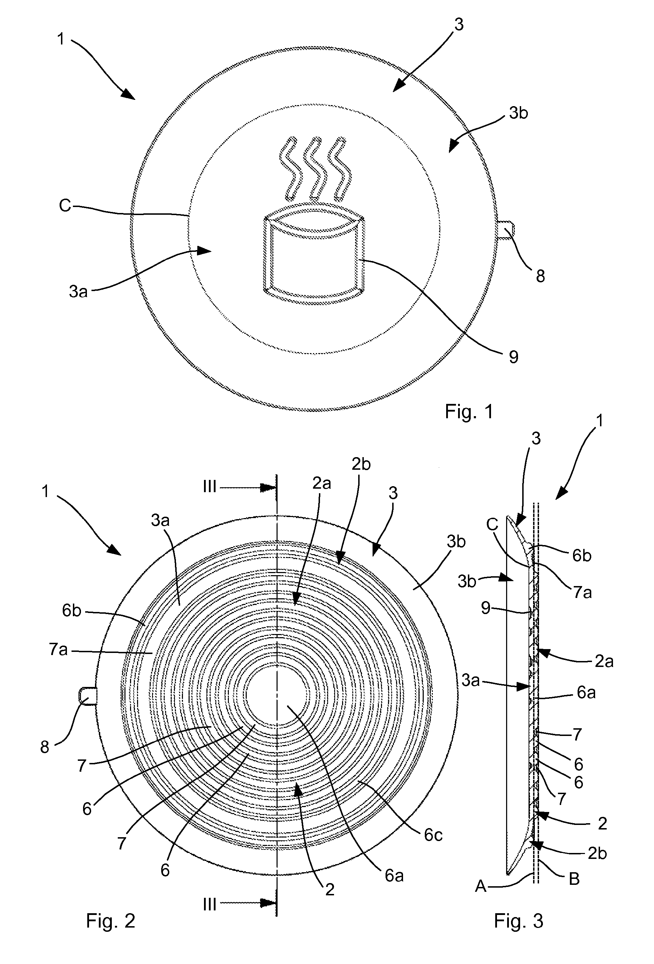

The different views of Figs 1 to 3 show a table mat 1 according to a preferred embodiment according to the present invention. The table mat 1 is adapted to be positioned under a piece of kitchen ware such as a pot (not shown) with the purpose of heat insulating the pot from a more or less horizontal, plane table surface (not shown) on which it is positioned. In the present specification the term "kitchen ware" also includes frying pans, saucepans, dishes etc.

The table mat according to the invention may be manufactured from a flexible material. If nothing else is indicated, in the specification the table mat according to the invention is described and defined in a relaxed position, i.e. when placed in a use position on a plane, horizontal surface without kitchen ware being positioned on it or other forces than gravity being exerted on it.

The table mat consists of two parts, namely a circular foot part 2 forming a bottom adapted for abutting the table surface, and a circular sucking disc part 3. The foot part 2 and sucking disc part 3 are positioned coaxially, i.e. concentrically when seen from above as in Fig. 1.

The sucking disc 3 is manufactured from an elastic or resilient material and comprises a plane bottom portion 3a and a peripheral portion 3b, which extends inclined upwards in a curve from the bottom portion 3a to form a concave sucking disc, which is adapted to adhere by means of pressure to a flat bottom of a piece of kitchen ware positioned on it. The plane bottom portion 3b has a lower surface defined by a plane A shown in Fig. 3 and a periphery C shown in Figs 1 and 3.

As can be seen in Figs 2 and 3 the foot part 2 consists of a number of downwards extending projections, generally designated 6, shaped as concentric circles. A circular, disc-shaped projection 6a is positioned in the centre of the foot part 2 and encircled by six circular projections 6. In other embodiments any from three to 15 concentric circles may be appropriate, depending for example on the diameter of the table mat. As can be seen in Fig. 3, seen in cross section the projections are provided in a wave form, the "wave hollows", i.e. the spaces between the projections generally designated 7, being defined by a lower surface of the sucking disc part 3.

The disc shaped projection 6a and the five consecutive projections 6 form a plane portion 2a of the foot part 2, this portion forming the major portion of the foot part 2. Hereby, the projections 6 of the plane portion 2a form in the relaxed position of the table mat 1 shown in the figures a lower surface, which in a plane designated B in Fig. 3 abuts and rests stably on the table surface. The plane A marks the transition from the plane portion 2a of the foot part 2 to the bottom portion 3a of the sucking disc part 3. The planes A and B are parallel. The plane bottom portion 3a of the sucking disc part 3 is attached to upper parts of the projections 6 of the plane major portion 2a of the foot part 2.

The remaining, outermost projection 6b (consequently forming a minor portion 2b of the foot part 2) is positioned on a lower surface of the peripheral portion 3b of the sucking disc part 3. Hereby, in the relaxed position of the table mat 1 shown in the figures this projection 6b is positioned above the plane portion 2a of the foot part 2. Note that to improve this advantage the space 7a between the projection 6b and the consequent projection 6c is larger than the remaining spaces 7.

When a piece of kitchen ware is positioned upon the table mat 1, the outermost projection 6b is pushed down to also abut the table surface, thus providing a more stable position of the kitchen ware on the table surface. At the same time the peripheral portion 3b of the sucking disc part is pushed down, the elastic properties of the sucking disc part 3 effecting a vacuum within the table mat 1 providing strong adhesion between the piece of kitchen ware and the table surface. Consequently, when the piece of kitchen ware is raised from the table surface, the table mat 1 adheres to the bottom, making it superfluous to also move the table mat 1. Depending on the frictional forces between the table mat 1 and the table surface it might also be possible to simply slide the piece of kitchen ware across the table surface without the table mat 1 losing its adhesion to the kitchen ware. Pulling a flap 8 on the peripheral portion 3b of the sucking disc part 3, the table mat 1 can be easily pulled off of the bottom of the kitchen ware.

As can be seen in Fig. 2, in the embodiment shown the peripheral portion 3b of the sucking disc part 3 projects beyond a peripheral edge of the foot part 2, i.e. beyond a peripheral edge of the outermost projection 6b. Further, the bottom portion 3a has a diameter of about 2/3 of a diameter of the entire table mat 1. In other words an outer edge of the outermost projection 6c of the plane portion 2a of the foot part 2 has a diameter of about 2/3 of a diameter of an outer edge of the peripheral portion 3b of the sucking disc part 3. This provides a simple, effective structure of the table mat with superior adhesive properties because of the resultant relatively large sucking disc and consequently larger vacuum in the sucking disc, as well as superior stability properties because of a relatively large diameter support surface abutting the table surface.

As can be seen in Fig. 3, the peripheral portion 3b of the sucking disc part 3 measured in a direction normal to the planes A and B extends a distance from the bottom surface of the foot part 2 corresponding to three to five times a combined maximum thickness of the bottom portion 3a of the sucking disc part 3 and the foot part 2. In the present case this maximum thickness can be measured at any of the projections 6. This provides an optimum compromise between an overall small thickness of the table mat 1 and a good adhesive effect because of the suction space available within the sucking disc part 3.

The foot part 2 and sucking disc part 3 are preferably integrally moulded from an elastic heat resistant and heat insulating material, such as a silicone composition. The heat resistant material should be capable of being used as a table mat (without melting, losing its dimensions or otherwise being destroyed) with kitchen ware with a bottom temperature of up to 150°C or more, preferably at least 200°C, more preferably 250°C, and most preferred 300°C. Silicone compositions capable of this are available on the market. Examples of preferred silicone compositions are RTV 835 (heat-stable up to about 350°C), RTV 250, RTV 254, and RTV 256 (heat-stable up to about 280°C).

In principle, the foot part 2 need not be resilient and can be manufactured from a material different from that of the sucking disc part 3, such as wood or rubber.

As can be seen in Fig. 1, in the present embodiment during moulding a logo 9 has been imprinted into the upper surface of the table mat. The depressions of the logo 9 are also visible in Fig. 3. Text such as a warning of the maximum heat-stable temperature of the applied material could also be imprinted.

## Claims

1. A table mat (1) adapted for heat insulating a piece of hot, flat-bottomed kitchen ware, such as a pot, from a plane surface, such as a table surface,
comprising a foot part (2) forming a bottom adapted for abutting said plane surface to support said table mat (1),
**characterized by**
further comprising a substantially circular sucking disc part (3) manufactured from an elastic heat insulating material and comprising a substantially plane bottom portion (3a) and a peripheral portion (3b) extending inclined upwards from said bottom portion (3a) to form a concave sucking disc adapted to adhere by means of pressure to a flat bottom of said kitchen ware,
said bottom portion (3a) of said sucking disc part (3) having a diameter of at least ¼ of a diameter of the entire table mat (1),
said bottom portion (3a) of said sucking disc part (3) being attached to a plane major portion (2a) of said foot part (2), said bottom portion (3a) of said sucking disc part (3) and said plane portion (2a) of said foot part (2) being substantially plane-parallel,
said peripheral portion (3b) of said sucking disc part (3) projecting to or beyond a peripheral edge of said foot part (2).

2. A table mat (1) according to claim 1, wherein said foot part (2) is substantially circular, said foot and sucking disc parts (2, 3) being positioned coaxially.

3. A table mat (1) according to claim 2, wherein said foot part (2) comprises a number of downwards extending projections (6, 6a, 6b, 6c) shaped as concentric circles.

4. A table mat (1) according to claim 3, wherein at least one of said projections (6b) of said foot part (2) is positioned on said peripheral portion (3b) of said sucking disc part (3), said projection (6b) being positioned above said plane portion (2a) of said foot part (2) and being adapted to abut said plane surface when a piece of kitchen ware is positioned on said table mat (1).

5. A table mat (1) according to claim 3 or 4, wherein an outer edge of an outermost said projection (6c) of said plane portion (2a) of said foot part (2) has a diameter of 0.25 to 0.95 of a diameter of an outer edge of said peripheral portion (3a) of said sucking disc part (3).

6. A table mat (1) according to any one of the previous claims, wherein said peripheral portion (3b) of said sucking disc part (3) measured in a direction normal to a plane (A) of said bottom section (3a) of said sucking disc part (3) extends a distance from a bottom surface of said foot part (2) corresponding to three to five times a combined maximum thickness of said bottom portion (3a) of said sucking disc part (3) and said foot part (2).

7. A table mat (1) according to any one of the previous claims, wherein a maximum thickness of said foot part (2) is 0.5 to 1.5 times that of said bottom portion (3a) of said sucking disc part (3).

8. A table mat (1) according to any one of the previous claims, wherein said foot and sucking disc parts (2, 3) are integrally moulded parts.

9. A table mat (1) according to any one of the previous claims manufactured from a heat-stable material, said table mat (1) being adapted to be used as a table mat with kitchen ware with a bottom temperature of up to 150°C or more.
